# EUROPEAN PATENT SPECIFICATION

(11) **EP 3 483 295 B1**
(45) Date of publication and mention of the grant of the patent: **13.01.2021**
(21) Application number: 18205833.9
(22) Date of filing: 13.11.2018
(51) Int. Cl.: C22C 38/00, B23K 26/00, B23K 9/167, B23K 35/30, B23K 9/04, C22C 38/58, C22C 38/52, C22C 38/46, C22C 38/44, C22C 38/42, C22C 38/04, C22C 38/02, B23K 9/173, B23K 26/34, C21D 1/32, B23K 35/40, B23K 35/02, B23K 101/20, B23K 103/04

(54) **REPAIR-WELDING MATERIAL FOR DIE**
REPARATURSCHWEISSMATERIAL FÜR MATRIZE
MATÉRIAU DU SOUDAGE DE RÉPARATION POUR MOULE

(30) Priority: 14.11.2017 JP 2017218923
(43) Date of publication of application: 15.05.2019
(73) Proprietor: Daido Steel Co., Ltd., Nagoya-shi Aichi 461-8581 (JP)
(72) Inventor: SHIMIZU, Takayuki, deceased (JP); MASUDA, Tetsuya, Tokyo, Tokyo 108-8478 (JP); UMEMORI, Naoki, Nagoya-shi,, Aichi 457-8545 (JP)
(74) Representative: Diehl & Partner

(56) References cited:
- EP-A2- 2 939 763
- WO-A1-2017/038879
- JP-A- H08 164 465
- JP-A- 2010 051 982

## Description

### TECHNICAL FIELD

The present invention relates to a repair-welding material for die and more specifically, relates to a repair-welding material for die for carrying out repair-welding of a die made of tool steel.

### BACKGROUND ART

As a metallic material constituting a die that is used for molding a metallic material, tool steels represented by JIS SKD61 or SKD11 have been widely used. From the viewpoint for suppressing wear in a die even after carrying out a number of times of molding, a metallic material constituting the die is demanded to have a high hardness.

However, even in a die constituted of a metallic material having a high hardness, when used a number of times, damage such as wear is inevitably generated in the die. When damage is generated, a damaged part is repaired by welding using a repair-welding material for die. As the repair-welding material for die, SKD61, SKD11, or a metallic material having a similar component composition thereto has been frequently used. Even in a repaired part, suppression of wear is important, and, from this viewpoint, a repair-welding material for die, having an excellent hardness like, for example, a repair-welding material for die described in Patent Document 1 has been proposed.

Patent Document 1: JP-A 2014-147965

Document EP 2 939 763 A2 by the applicant discloses a steel for a mold, having a composition containing, on a % by mass basis, 0.25% < C < 0.38%, 0.01% < Si < 0.30%, 0.92% < Mn < 1.80%, 0.8% < Cr < 2.2%, 0.8% < Mo < 1.4%, and 0.25% < V < 0.58%, with the balance being Fe and inevitable impurities.

Document WO 2017/038879 A1 by the applicant discloses a steel for molds containing 0.38 mass% < C < 0.55 mass%, 0.003 mass% ≤ Si < 0.300 mass%, 0.70 mass% < Mn < 1.80 mass%, 0.80 mass% ≤ Cr < 2.00 mass%, 0.003 mass% ≤ Cu < 1.200 mass%, 0.003 mass% ≤ Ni < 1.380 mass%, 0.500 mass% < Mo < 3.500 mass%, 0.55 mass% < V < 1.20 mass% and 0.0002 mass% ≤ N < 0.1200 mass%, with the balance made up of Fe and unavoidable impurities; satisfying 0.550 mass% < (Cu + Ni + Mo) < 3.600 mass%.

### SUMMARY

In order to suppress wear in a die on which a repair-welding has been carried out using a repair-welding material for die, it is desirably that both a base material constituting the die and the repair-welding material have a high hardness. However, as factors causing wear in a repaired die, not only wear caused by the friction between a substance to be formed and the die, which is attributed to the insufficient hardness of a surface, but also scratch wear by an oxide or nitride generated on the surface of the die base material or the repair-welding material are important. Particularly, in the repaired part which has been repaired by using the repair-welding material, the oxidation or nitration of the metallic material is likely to proceed due to a high temperature during welding. In a repaired die, there are cases in which the oxide or nitride generated on the surface of the repaired part drops from the surface of the repaired part and causes scratch wear on the surface of the repaired part or the die base material.

Particularly, in a die that is used for a hot-stamping molding of a steel material, a surface of the die comes into contact with a material to be worked, which has been heated to a high temperature such as 700°C or higher, the surface of the die is likely to be subjected to friction by an oxide of a metal constituting a surface of the material to be worked. The oxide of the metal constituting the surface of the material to be worked is mainly an oxide of Fe in the case where the material to be worked is made of a steel material on which plating is not carried out, or an oxide of a plating metal such as Al or Mg in the case where plating has been carried out on the surface of the material to be worked. Furthermore, in a hot-stamping molding, the surface of the die is likely to be heated up to near 300°C due to the heat transfer from the material to be worked. In such a case, the die surface including the repaired part repaired by using the repair-welding material is exposed to an environment that is likely to promote oxidization. As described above, in the die that is used for a hot-stamping molding, scratch wear is likely to be generated due to the oxide being generated on the surface of the die due to the contact with the material to be worked in addition to the oxide on the surface of the material to be worked.

As described above, even in the case where the die base material and the repaired part has a high hardness in the die repaired by using a repair-welding material, there are cases in which the die base material or the repaired part is likely to be worn due to scratch wear caused by an oxide or nitride being formed on the surface of the repaired part. In such a case, even when the die is repaired by using the repair-welding material, subsequent wear will occur within a short period of time.

An object that the present invention attempts to achieve is to provide a repair-welding material for die, capable of suppressing scratch wear in a die on which repair-welding has been carried out by using the repair-welding material.

In order to achieve the above-described object, the repair-welding material for die according to the present invention has a composition as defined in the present claim 1.

In addition, the repair-welding material for die may be used for repair-welding of a die having a hardness of 52 HRC or less at room temperature.

According to the repair-welding material for die according to the present invention, particularly, the contents of Si, Cr and Mo are suppressed at a low level. Therefore, in the case where the repair-welding material for die is used for the repair-welding of a die, an oxide or nitride having a high hardness is not easily formed on a surface of a repaired part. In addition, the formation of an oxide or nitride in the repaired part is suppressed also by suppressing the contents of O and N in the repair-welding material for die at a low level.

Furthermore, the repair-welding material for die according to the present invention has a high thermal conductivity, since the contents of alloy elements are suppressed at a low level. Therefore, when a die on which repair-welding has been carried out by using the repair-welding material for die comes into contact with a high-temperature material to be worked, the surface of the repaired part does not easily reach a high temperature and the oxidation of a metallic material does not easily proceed in the repaired part.

Due to each of the above-described effects, a hard metallic oxide or metallic nitride is not easily generated on a surface of a part on which repair-welding has been carried out by using the repair-welding material for die. As a result, the occurrence of scratch wear in the repaired part or a surface of a die base material other than the repaired part due to the oxide or nitride can be suppressed.

Here, in the case where the welded portion has a thermal conductivity of 30 W/(m·K) or more at room temperature, the welded portion has a sufficiently high thermal conductivity. Therefore, the oxidation of the metallic material occurring when a die on which repair-welding has been carried out by using the repair-welding material for die comes into contact with a high-temperature material to be worked or the consequent scratch wear of the die surface can be effectively suppressed.

Here, in the case where the welded portion has a hardness of 45 HRC or more and 60 HRC or less at room temperature, the welded portion can ensure not only a hardness demanded as a die but also a workability for cutting or grinding. The hardness of the welded portion does not have a strong influence on the suppression of scratch wear. Even in the case where the hardness is suppressed at 60 HRC or less, the formation of an oxide or nitride having a high hardness which causes scratch wear is suppressed as described above and thus, the wear of a surface of the welded portion can be sufficiently suppressed.

In addition, in the case where the repair-welding material for die satisfies, by mass%, Ni≤0.50%, Cu≤0.50%, and Co≤0.10%, the influence of these elements on the characteristics of the repair-welding material for die, such as a decrease in the thermal conductivity of the welded portion, can be suppressed within a range in which the suppression of scratch wear is not influenced.

In addition, in the case where the repair-welding material for die satisfies, by mass%, P≤0.030% and S≤0.050%, the influence of these elements on the characteristics of the repair-welding material for die, such as a generation of welding defects in the welded portion, can be suppressed within a range in which the suppression of scratch wear is not influenced.

In addition, in the case where the repair-welding material for die is used for a repair-welding of a die having a hardness of 52 HRC or less at room temperature, the formation of an oxide or nitride having a high hardness in the repaired part is suppressed as described above. Therefore, the scratch wear of the die base material by the oxide or nitride being generated on the surface of the repaired part is not easily caused even in the case where the hardness of the die base material is not so high.

### BRIEF DESCRIPTION OF DRAWINGS

FIG. 1 shows test results indicating relationships between contents of alloy elements in a repair-welding material for die and hardness of an oxide.
FIG. 2 shows test results indicating a relationship between hardness of the oxide in the repair-welding material for die and maximum depth of a recessed portion by wear.
FIG. 3 shows test results indicating a relationship between thickness of the oxide in the repair-welding material for die and the maximum depth of the recessed portion by wear.

### EMBODIMENTS

Hereinafter, a repair-welding material for die according to an embodiment of the present invention will be described in detail. The repair-welding material for die according to the present embodiment is a material for repairing dies, such as a die for a hot-stamping molding, by welding and has a component composition and characteristics as described below.

In the present specification, property values such as a thermal conductivity or hardness, described regarding a welded portion being formed by using a repair-welding material or regarding a die base material are values at room temperature. In addition, property values of the welded portion are values obtained in a so called "as-welded" state (a state in which no further treatment such as a heat treatment is carried out after welding). Properties of the welded portion can be evaluated by using a welded portion produced under welding conditions simulating an actual repairing of a die by using a repair-welding material. For example, a welded portion produced under TIG welding is preferably used. In addition, in the case where it is difficult to accurately evaluate properties of a metallic material constituting the welded portion due to an oxide or nitride formed on the surface of the welded portion, the properties may be evaluated after the oxide or nitride on the welded portion surface is appropriately removed by grinding or the like.

### (Component Composition of Repair-Welding Material for Die)

The repair-welding material for die (hereinafter, simply referred to as the "repair-welding material" in some cases) according to the present embodiment contains C, Si, Mn, Cr, Mo, and V as essential elements with a balance being Fe and inevitable impurities. In addition, the contents of N and O are limited to predetermined contents or less. Contents of the respective component elements and reasons for limiting will be described below. Hereinafter, the unit of the contents of the respective component elements is mass%.

### (1) 0.18%≤C≤0.35%

The content of C significantly influences the hardness of the repair-welding material. As the content of C increases, the hardness increases. The content of C being 0.18% or more makes it easy to provide a high hardness such as 45 HRC or more in the as-welded state, which is generally demanded for dies that are used for molding a metallic material, such as a die for a hot-stamping, in a welded portion formed by using the present repair-welding material.

From the viewpoint of particularly increasing the hardness of the repair-welding material, the content of C is more preferably 0.27% or more, which makes it easy to provide a hardness of 48 HRC or more in the welded portion.

On the other hand, in the case where the content of C is too large, the effect of improving the hardness of the welded portion is saturated. In addition, as described below as a characteristic of the repair-welding material for die, from the viewpoint of effectively benefitting an effect of suppressing scratch wear caused by an oxide or nitride having a high hardness, which is derived from a decrease in the contents of alloy elements, or the like, the hardness of the welded portion does not need to be excessively increased for the purpose of suppressing wear. Furthermore, in the case where the content of C is too large, the thermal conductivity of the welded portion decreases. From these viewpoints, the content of C is set to 0.35% or less. Such a content of C makes it easy to suppress the hardness at 60 HRC or less in the welded portion in the as-welded state, and also makes it easy to obtain a high thermal conductivity such as 30 W/(m·K) or more.

The content of C is more preferably 0.33% or less, which can prevent the hardness of the welded portion from being excessively high and makes it easy to suppress the hardness at approximately 58 HRC or less.

### (2) 0.01%≤Si≤0.20%

Si is an element that forms an extremely hard oxide. In addition, in the case where a large amount of Si is included in an iron oxide, the hardness of the iron oxide increases. Furthermore, in the case where the content of Si increases, the thermal conductivity of the repair-welding material decreases. Therefore, from the viewpoints of suppressing the formation of an oxide having a high hardness and improving the thermal conductivity in the repair-welding material, the content of Si is preferably as small as possible and is limited to 0.20% or less.

From the above-described viewpoints, the content of Si is preferably as small as possible, but Si is an element that is inevitably included in order for component adjustment or refining in the manufacturing step of a steel material. It is industrially extremely difficult to reduce the content of Si in the repair-welding material to less than 0.01%, and thus the content of Si is set to 0.01% or more.

### (3) 1.30%≤Mn≤1.90%

The inclusion of Mn improves hardenability of the repair-welding material. Cr and Mo are also elements that improve hardenability; however, in the repair-welding material according to the present embodiment, the inclusion of a large amount of Cr and Mo is not preferred from the viewpoint of suppressing the generation of a hard oxide as described below. Therefore, a sufficient hardenability is ensured by the inclusion of Mn. From the viewpoint of obtaining a hardness of 45 HRC or more in the as-welded state in a welded portion formed by using the repair-welding material that has been quenched, the content of Mn is set to 1.30% or more. Unlike Cr and Mo, Mn does not easily form a hard oxide.

On the other hand, in the case where an excessively large amount of Mn is added, the thermal conductivity of the repair-welding material decreases. From the viewpoint of ensuring the thermal conductivity, the content of Mn is set to 1.90% or less.

### (4) 0.50%≤Cr≤1.50%

### (5) 1.50%≤Mo≤2.50%

Cr and Mo are elements that improve the hardness of the repair-welding material. From the viewpoint of achieving a hardness high enough to withstand the use as a die, such as 45 HRC or more, in the welded portion in the as-welded state, the content of Cr is set to 0.50% or more, and the content of Mo is set to 1.50% or more.

On the other hand, similar to Si, Cr and Mo are also elements that form an extremely hard oxide. In addition, the inclusion of a large amount of Cr or Mo in an iron oxide increase the hardness of the iron oxide. In addition, increase in the content of Cr or Mo causes a decrease in the thermal conductivity of the repair-welding material. Thus, in the repair-welding material, from the viewpoint of suppressing the formation of an oxide having a high hardness and improving the thermal conductivity, the contents of Cr and Mo are preferably as small as possible. Therefore, the content of Cr is limited to 1.50% or less, and the content of Mo is limited to 2.50% or less. Cr and Mo are also elements that improve the hardenability of a steel material. However, in the present repair-welding material, the contents of Cr and Mo are limited, and the effect of improving hardenability, derived from these elements, cannot be sufficiently exhibited. However, as described above, hardenability is guaranteed by Mn. The content of Cr is preferably 0.8% or more and 1.3% or less, and the content of Mo is preferably 1.7% or more and 2.2% or less.

### (6) 0.30%≤V≤1.00%

V has an effect of miniaturizing crystal grains in the repair-welding material. When welding is carried out by using the repair-welding material, a metallic material is rapidly cooled from a liquid state in the welded portion, and thus there is a tendency that the crystal grains are likely to coarsen. The inclusion of V can suppress the crystal grains from coarsening. In the repair-welding material, miniaturization of the crystal grains can provide an effect of suppressing cracks being generated in the welded portion during a welding operation. From the viewpoint of sufficiently obtaining the effect of miniaturizing the crystal grains, the content of V is set to 0.30% or more.

On the other hand, in the case where V is excessively included, a coarse nitride having a particle diameter of, for example, more than 10 µm is likely to be formed. From the viewpoint of suppressing scratch wear by the nitride in the welded portion, the content of V is set to 1.00% or less.

The repair-welding material according to the present embodiment contains the above-described predetermined amounts of C, Si, Mn, Cr, Mo, and V with the balance being Fe and inevitable impurities. Here, regarding the inevitable impurities, elements and upper limit amounts as described below are assumed.

### (7) N≤0.020%

### (8) O≤0.0050%

N and O dissolve into Fe from the atmosphere during the industrial manufacturing of a steel material and thus, they are inevitably included into the repair-welding material. However, excessively large contents of N and O lead to generation of blowholes (welding defects) during welding. In addition, N and O respectively form a nitride and oxide of a metallic element in the repair-welding material. When a metallic nitride and metallic oxide, particularly, those having a large particle diameter are formed on the surface of a repaired part repaired by welding in the die, scratch wear is likely to be caused on the surface of the repaired part or the surface of the die base material other than the repaired part.

Therefore, the contents of N and O are preferably reduced as much as possible. The content of N reduced to 0.020% or less and the content of O reduced to 0.0050% or less can effectively suppress the formation of coarse nitride and oxide. On the other hand, in the manufacturing step of the repair-welding material, as the contents of N and O are reduced, the manufacturing costs increase. Therefore, the contents of N and O are preferably managed in ranges of the above-described upper limit or less, from the viewpoint of avoiding an excess increase in the manufacturing costs.

### (9) Ni≤0.50%

### (10) Cu≤0.50%

### (11) Co≤0.10%

Ni, Cu, and Co are inevitably mixed into the repair-welding material from a raw material such as an iron scrap or an iron alloy. However, even in the case where they are contained, the elements with the contents of the above-described respective upper limit values or less do not easily have a significant influence on the characteristics of the repair-welding material, such as the suppression of the formation of a coarse nitride and oxide, ensuring a sufficient thermal conductivity, and the consequent suppression of scratch wear. Therefore, the contents of these elements are preferably suppressed to the respective upper limits or less.

### (12) P≤0.030%

### (13) S≤0.050%

P and S are also elements that are inevitably mixed into the repair-welding material, derived from the raw material or the like. However, even in the case where they are contained, the elements with the contents of the above-described respective upper limit values or less do not easily have a significant influence on the characteristics of the repair-welding material, such as the suppression of the formation of a coarse nitride and oxide, ensuring a sufficient thermal conductivity, and the consequent suppression of scratch wear. Therefore, the contents of these elements are preferably suppressed to the respective upper limits or less.

In addition to N, O, Ni, Cu, Co, P, and S described above, the following elements can be exemplified as inevitable impurities being assumed:
Al<0.050%,
W<0.10%,
Nb<0.10%,
Ta<0.01%,
Ti<0.10%,
Zr<0.01%,
B<0.010%,
Ca<0.010%,
Se<0.03%,
Te<0.01%,
Bi<0.01%,
Pb<0.03%,
Mg<0.02%,
REM<0.10%, and the like.

### (Characteristics of Repair-Welding Material for Die)

The repair-welding material for die according to the present embodiment has the above-described component composition. Particularly, since the contents of Si, Cr and Mo are suppressed at a low level, and the contents of N and O are suppressed at a low level, a metallic oxide or metallic nitride having a high hardness is not easily generated.

When welding is carried out by using a welding material made of a steel material, the molten welding material absorbs or discharges nitrogen or oxygen from the atmosphere during the welding. In the case where the welding material has a high nitrogen or oxygen concentration, the nitrogen or oxygen is discharged as a gas during the welding and is likely to form blowholes or likely to bond with an alloy element in the steel material to form a nitride or oxide. At this time, in the case where the welding material contains a large amount of alloy elements such as Si, Cr and Mo, an oxide having a high hardness which contains a high concentration of these alloy elements is likely to be formed. In addition, these alloy elements are contained in an iron oxide. The iron oxide containing these alloy elements has a higher hardness than that of the oxide of iron alone (FeO, Fe₂O₃, or Fe₃O₄).

When a metallic oxide or metallic nitride is formed on the surface of a repaired part of a die on which repairing has been carried out by using the repair-welding material, the oxide or nitride is likely to drop from the surface of the repaired part due to the friction with a material to be worked during the molding of a metallic material by using the die. There is a possibility that the dropped oxide or nitride undergoes friction with the surface of the repaired part or the surface of the die base material other than the repaired part, to cause scratch wear on the surface of the repaired part or the surface of the die base material. An oxide or nitride having a higher hardness is likely to bury its particles deeper into the surface of the repaired part or the die base material, to increase the wear amount.

Particularly, an oxide or nitride being formed in the repaired part in a welding process frequently has a large particle diameter than an oxide or nitride being formed by oxidation or nitration of the surface of the die base material. Typically, the oxide or nitride being formed in the repaired part has a particle diameter of approximately 1 to 10 µm. An oxide or nitride having a large particle diameter is likely to contribute to the wear of the surface of the repaired part or the die base material.

However, the repair-welding material according to the present embodiment has the limited contents of the alloy elements including Si, Cr and Mo, and the limited contents of N and O, all suppressed at low levels. Therefore, the repair-welding material itself before welding has a limited amount of an oxide or nitride suppressed at a low level. Furthermore, even after the melting of the material in a welding step, the amount of the oxide or nitride does not easily increase. Even when welding is carried out at the same temperature, small contents of Si, Cr, and Mo, and small contents of N and O decrease the thickness or mass of an oxide layer being formed during welding. In addition, as described in Examples described below, on the surface of a die including a die for a hot-stamping molding, the hardness of the oxide being formed in the repaired part has a larger influence on the wear amount of scratch wear than the amount of the oxide has. The hardness of the oxide is lowered by suppressing the contents of the alloy elements such as Si, Cr and Mo. Accordingly, in the repaired die, the amount or hardness of the oxide or nitride being formed on the surface of the repaired part decreases. Therefore, the scratch wear of the surface of the repaired part or the die base material by the oxide or nitride can be suppressed.

Furthermore, the repair-welding material according to the present embodiment has the above-described component composition. Particularly, since the contents of C, Si, Cr, and Mo are suppressed at a low level, a high thermal conductivity can be achieved. For example, a welded portion on which welding has been carried out by using the repair-welding material according to the present embodiment can provide a thermal conductivity of 30 W/(m·K) or more. SKD61 or SKD11, which is used for a general repair-welding of a die, has components that are not optimized as a welding material and has a thermal conductivity of from 18 to 25 W/(m·K). The repair-welding material according to the present embodiment exhibits a higher thermal conductivity than that of SKD61 and SKD11. The upper limit of the thermal conductivity is not particularly limited.

Generally, as the temperature of the surface of a steel material increases, oxidation is more likely to proceed on the surface and the thickness or mass of an oxide on the surface increases. In the die, a high-temperature material to be worked comes into contact with the die surface, and thus the temperature of the die surface instantly increases due to heat transfer from the material to be worked, and the formation of an oxide is more likely to proceed. The formation of an oxide becomes significant at a temperature of approximately 100°C or higher. Particularly, in a hot-stamping molding, the oxidation of the die surface due to heat transfer from the material to be worked is likely to occur.

However, in the die on which repairing has been carried out by using the repair-welding material according to the present embodiment, the welded portion has a high thermal conductivity. Therefore, heat transferred to the surface of the repaired part from the material to be worked is dissipated within a short period of time due to heat transfer to the inside of the metallic material. Therefore, the temperature of the surface of the repaired part does not easily increase, and, even when increases, the temperature is likely to decrease within a short period of time. Therefore, the formation of an oxide on the surface of the repaired part does not easily proceed during molding. As described above, since the welded portion has a high thermal conductivity, in conjunction with the above-described effects of the component composition of the repair-welding material, the formation of the oxide having a high hardness in the repaired part of the die and the consequent scratch wear on the surfaces of the repaired part and the die base material can be more effectively suppressed.

The repair-welding material according to the present embodiment preferably provides a welded portion formed having a hardness of 45 HRC or more. In the case where the hardness of the welded portion is less than 45 HRC, the repaired die can hardly withstand the use as a die in some cases. Particularly, in a hot-stamping molding, in the case where the hardness of the welded portion is less than 45 HRC, plastic deformation may occur in a portion at which the surface pressure locally becomes high in the repaired part on the die surface, and the dimensional accuracy of molded articles cannot be maintained in some cases. The hardness of the welded portion is particularly preferably 48 HRC or more.

On the other hand, in the case where the welded portion is too hard, it becomes difficult to carry out a cutting work or grinding work which intends to adjust the die shape in a part on which building-up welding has been carried out in the repairing of the die. Therefore, the hardness of the welded portion is preferably 60 HRC or less, and particularly preferably 58 HRC or less. The hardness of the welded portion being formed of the repair-welding material is determined by the component composition of the repair-welding material.

It is generally believed that the wear of a metallic material can be more suppressed as the metallic material becomes harder. However, regarding the scratch wear of the die caused by the friction with the oxide or nitride formed on the surface of the welded portion, particularly, regarding scratch wear during a hot-stamping molding, the hardness of the welded portion does not have a large influence as demonstrated in Examples below. Rather, the amount or hardness of the oxide or nitride being formed, particularly, the hardness has a large influence. Therefore, even in the case where the hardness of the welded portion is as relatively low as 60 HRC or less, the generation of the hard oxide or nitride is suppressed due to the effects of the component composition and the high thermal conductivity, as described above. Therefore, scratch wear on the surface of the repaired part does not easily become a severe problem.

### (Method for Manufacturing Repair-Welding Material for Die)

The repair-welding material according to the present embodiment can be manufactured, for example, as a wire rod for welding (welding rod), by producing an ingot from molten steel in which predetermined components are dissolved in a predetermined compositional ratio, and heating the ingot at a temperature of from 900°C to 1,250°C so as to carry out forging and rolling. In addition, wire drawing or the like may be carried out on the rolled material. When the preparation of the molten steel and the production of the ingot are carried out under reduced pressure, it is easy to suppress the concentration of N and O in the repair-welding material manufactured.

Furthermore, the present repair-welding material is preferably manufactured by carrying out annealing as a thermal treatment step. Regarding annealing conditions, a spheroidizing annealing in which the material is heated at a temperature of from 800°C to 950°C for three hours or longer and slowly cooled to 700°C or lower at a cooling rate of 50°C/hour or less, and a low-temperature annealing in which the material is heated at a temperature of from 600°C to 780°C for five hours or longer and cooled in the air or with water, can be exemplified.

### (Method of Repair-Welding of Die)

The repair-welding material according to the present embodiment is used for the repair-welding of a die. The present repair-welding material can also be preferably applied to any of TIG welding and laser welding.

In the die, building-up welding may be carried out by using the present repair-welding material on a part in which repairing becomes necessary due to wear or the like. In addition, the shape of the die may be adjusted by removing a swollen part of the welded portion by a mechanical work such as cutting or grinding to provide the welded portion with the same surface as the die surface. A post-thermal treatment may also be carried out on the welded portion as necessary.

The kind of the die on which repairing is carried out by using the present repair-welding material is not particularly limited. Examples thereof include dies that are used for a variety of works of a metallic material, such as a hot-stamping (hot-pressing), cold-pressing, and rolling, a die for die-casting, and the like. Among these, the present repair-welding material is preferably used for a die for a hot-stamping molding. In a hot-stamping molding, due to the contact between a heated material to be worked and the die, the formation of an oxide or nitride on the die surface, the dropping of the oxide or nitride, and the friction by the dropped oxide or nitride are likely to occur. However, these phenomena can be suppressed by carrying out repairing by using the repair-welding material according to the present embodiment.

The metallic material (the die base material) constituting the die which is a subject of welding is not particularly limited. However, the die base material preferably has a hardness of 45 HRC or more. Similar to what has been described above regarding the hardness of the welded portion for which the repair-welding material is used, in the case where the hardness of the die base material is less than 45 HRC, the repaired die can hardly withstand the use as a die including a die for a hot-stamping molding, in some cases.

On the other hand, the hardness of the die base material is preferably 52 HRC or less. As described above, in a repaired part for which repairing is carried out by using the repair-welding material according to the present embodiment, the generation of an oxide or nitride having a high hardness is suppressed due to the effects of the component composition of the repair-welding material and the high thermal conductivity. Therefore, even in the case where the hardness of the die base material is not relatively high, for example, 52 HRC or less, the scratch wear of the die base material surface by an oxide or nitride derived from the repaired part is not easily caused.

The die base material preferably has a thermal conductivity of 18 W/(m·K) or more. This is because, in the case where not only the repaired part for which the repair-welding material is used but also the die base material has a high thermal conductivity, heat transferred from the heated material to be worked is easily dissipated from the surface of the repaired part. On the other hand, the thermal conductivity of the die base material is preferably 25 W/(m·K) or less. Even in the case of a large-sized die, the die base material is required to have an excellent hardenability in order to obtain a necessary hardness after a thermal treatment. When elements that enhance hardenability, such as C, Mn, Cr, and Mo are added in a balanced manner much enough to impart a sufficient hardenability, the thermal conductivity is likely to reach 25 W/(m·K) or less.

Examples of the die base material having a hardness of from 45 to 52 HRC and a thermal conductivity of from 18 to 25 W/(m·K) at room temperature, include SKD61, SKD11, SKH51, SKD6, SKD7, SKD12, SKT4, and the like.

### EXAMPLES

Hereinafter, Examples and Comparative Examples of the present invention will be described. Meanwhile, the present invention should not be construed as being limited to these Examples. Hereinafter, unless particularly otherwise described, tests were all carried out at room temperature (25°C) in the atmosphere.

### Test 1: Relationship between Contents of Alloy Elements and Hardness of Oxide

In order to reveal the relationship between the contents of alloy elements in a repair-welding material and the hardness of an oxide being formed on a welded portion surface, repair-welding materials having different contents of Si, Cr and Mo were produced as models, and the hardness of the oxide was evaluated.

### (Production of Specimen)

Repair-welding materials respectively containing component elements shown in Table 1 with a balance being Fe and inevitable impurities were prepared in the following manner. First, 30 kg of molten steel was prepared in a vacuum induction furnace, followed by carrying out casting, to thereby produce an ingot. The obtained ingot was heated at 1,200°C for five hours and then hot forged until the diameter reached 30 mm. After the forging, the ingot was cooled in the air. After reaching room temperature, the ingot was heated again at 900°C for three hours and slowly cooled, thereby carrying out spheroidizing annealing.

From the repair-welding material obtained above, a test specimen of 20 mm in diameter × 10 mm in height was produced. The test specimen was held at 700°C for 10 hours and cooled in the air, thereby oxidizing the test specimen. Oxidation conditions in an actual welded portion are often milder than what has been described above; however, in order to easily understand the influence of oxidation, the above-described conditions under which oxidation easily proceeds are employed.

### (Measurement of Hardness of Oxide)

The hardness of the surface of the oxidized test specimen obtained above was measured by using a Micro Vickers tester (Digital Micro hardness tester, FM-800, manufactured by FUTURE-TECH Corporation). A measurement load was set to 100 g. The measurement was performed at 20 places on the test specimen surface, and the average value was computed and defined as the hardness of the oxide.

### (Test Results)

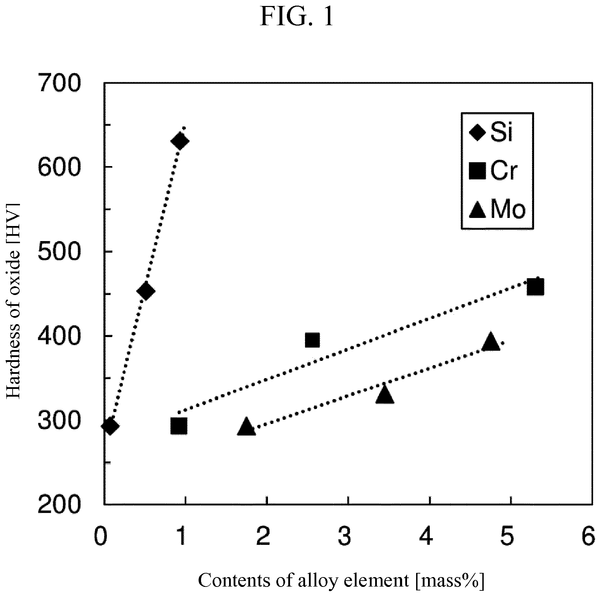

Table 1 shows the component compositions of the respective specimens and the measurement results (average values) of the hardness of the oxides. In addition, FIG. 1 shows the relationships between the contents of Si (specimens A1 to A3), Cr (specimens A1, A4, and A5), and Mo (specimens A1, A6, and A7) and the hardness of the oxide.

**[Table 1]**

| Specimen | Component composition [mass%] | | | | | | | | | | | Hardness (Hv) of oxide |
|---|---|---|---|---|---|---|---|---|---|---|---|---|
| | C | Si | Mn | Cu | Ni | Cr | Mo | V | Co | O | N | |
| A1 | 0.30 | 0.07 | 1.51 | 0.21 | 0.18 | 0.92 | 1.75 | 0.35 | 0.07 | 0.0021 | 0.011 | 293 |
| A2 | 0.29 | 0.51 | 1.51 | 0.21 | 0.19 | 0.91 | 1.78 | 0.35 | 0.07 | 0.0023 | 0.013 | 453 |
| A3 | 0.31 | 0.93 | 1.52 | 0.21 | 0.18 | 0.95 | 1.75 | 0.38 | 0.07 | 0.0019 | 0.011 | 631 |
| A4 | 0.30 | 0.08 | 1.49 | 0.21 | 0.19 | 2.56 | 1.76 | 0.37 | 0.07 | 0.0018 | 0.012 | 395 |
| A5 | 0.30 | 0.07 | 1.50 | 0.22 | 0.19 | 5.30 | 1.75 | 0.35 | 0.07 | 0.0015 | 0.013 | 458 |
| A6 | 0.31 | 0.08 | 1.52 | 0.21 | 0.17 | 0.95 | 3.45 | 0.37 | 0.08 | 0.0021 | 0.010 | 331 |
| A7 | 0.30 | 0.08 | 1.52 | 0.21 | 0.18 | 0.94 | 4.75 | 0.38 | 0.07 | 0.0017 | 0.011 | 394 |

According to Table 1 and FIG. 1, the hardness of the oxide significantly changed depending on the contents of the alloy elements. Particularly, as shown in FIG. 1, as the respective contents of Si, Cr and Mo increased, the hardness of the oxide increased. As can be seen from approximate lines illustrated by dotted lines in FIG. 1, it was found that the hardness of the oxide almost linearly increased with the content of each of these alloy elements. Particularly, the hardness of the oxide had a significant reliance on the amount of Si.

From these results, it is found that, in the repair-welding material, the respective contents of Si, Cr, and Mo are desirably suppressed at a low level in order to suppress the generation of an oxide having a high hardness.

### Test 2: Relationship between Hardness of Oxide and Wear Amount

In order to reveal the relationship between the hardness of the oxide being formed on the surface of the welded portion and the wear amount in the welded portion, the degrees of wear were evaluated in repair-welding materials in which oxides having a different hardness were formed, as models.

### (Wear Test)

Wear tests were carried out by using the repair-welding materials of the specimens A1 to A7 which were used in the test 1. Test specimens were obtained by cutting a part of the respective repair-welding materials of the specimens A1 to A7. Each of the test specimens was heated at 1,030°C for one hour, then, quenched by air blast cooling, and heated at from 550°C to 650°C for one hour to carry out tempering, to thereby adjust the hardness of the test specimen to 55 HRC±1 HRC. Finally, the test specimen was worked into a disc shape of 25 mm in diameter × 10 mm in height.

On each of the test specimens obtained as described above, a wear test was carried out in a ball-on-disc manner. At this time, the temperature of the disc was set to 500°C, and a ball made of a S40C material was used as a ball. The wear test was carried out at a disc rotation speed of 60 rpm for one minute, and then the test specimen was left to stand for five minutes, thereby oxidizing the surface of the disc. This cycle was repeated 100 times, and then the maximum depth of a recessed portion formed on the surface of the disc was measured by using a contact-type step profiler (contour measuring apparatus, SURFCOM 2000SD2, manufactured by TOKYO SEIMITSU CO., LTD.). Under oxidation conditions in this wear test, oxidation more easily proceeds than under oxidation conditions in an actual welded portion.

### (Test Results)

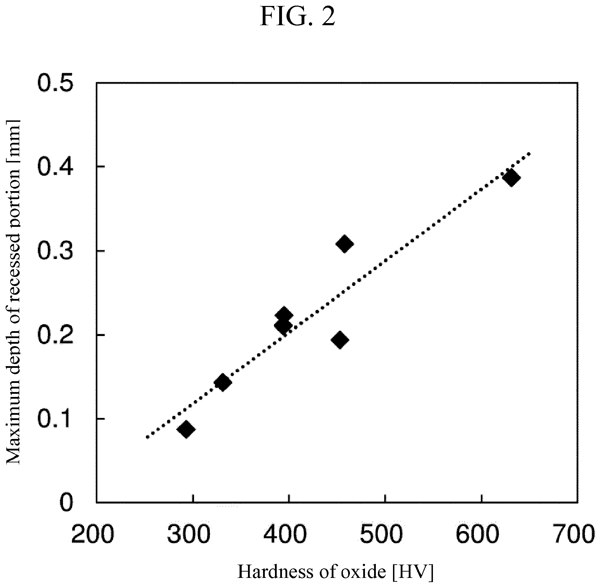

Table 2 and FIG. 2 show the relationship between the hardness (average value) of the oxide on the specimen surface and the maximum depth of the recessed portion.

**[Table 2]**

| Specimen | Hardness (HV) of oxide | Maximum depth of recessed portion (mm) |
|---|---|---|
| A1 | 293 | 0.087 |
| A2 | 453 | 0.194 |
| A3 | 631 | 0.387 |
| A4 | 395 | 0.223 |
| A5 | 458 | 0.308 |
| A6 | 331 | 0.143 |
| A7 | 394 | 0.211 |

From the results shown in Table 2 and FIG. 2, it was found that, as the hardness of an oxide being formed increased, the maximum depth of the recessed portion being formed due to wear increased, that is, the wear amount increased. As can be seen from the approximate line illustrated by dotted line in FIG. 2, it was found that the maximum depth of the recessed portion almost linearly increased with the hardness of the oxide.

From these results, it is found that, in the repair-welding material, the formation of a surface oxide having a high hardness is desirably suppressed in order to suppress wear in the welded portion. The results of the test 1 show that the respective contents of Si, Cr and Mo are preferably suppressed at a low level respectively in order to suppress the formation of the surface oxide having a high hardness.

### Test 3: Relationship between Thickness of Oxide and Wear Amount

In order to reveal the relationship between the thickness of the oxide being formed on the surface of the welded portion and the wear amount in the welded portion, the degrees of wear were evaluated in repair-welding materials in which oxides having a different thickness were formed, as models.

### (Production of Specimen)

Repair-welding materials respectively containing component elements shown in Table 3 with a balance being Fe and inevitable impurities were produced by the same manner as in the repair-welding materials used in the test 1.

### (Wear Test)

The repair-welding materials obtained above were subjected to cutting, quenching and tempering in the same manner as in the case of the test 2, and the hardness of the test specimens was adjusted to 55 HRC±1 HRC. A wear test was carried out in the same manner as in the case of the test 2 while oxidizing the specimen surface, and the maximum depth of the recessed portion was measured.

### (Measurement of Thickness of Oxide)

From the test specimen on which the wear test had been carried out, a non-worn portion was cut out. Then, the cross-section of the cut portion was observed, and the thickness of a layer of the oxide was measured by using an optical microscope. The thickness was measured at four places in the cross-sectional image, and the average value was computed and defined as the thickness of the oxide.

### (Test Results)

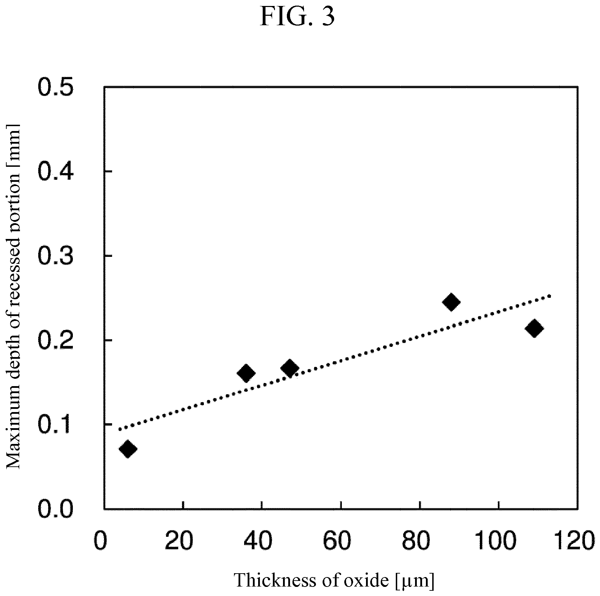

Table 3 shows the component compositions of the respective specimens, the measurement results (average values) of the thicknesses of the oxides and the maximum depths of the recessed portions. In addition, FIG. 3 shows the relationship between the measurement results (average values) of the thicknesses of the oxides and the maximum depths of the recessed portions.

**[Table 3]**

| Specimen | Component composition [mass%] | | | | | | | | | | | Thickness (µm) of oxide | Maximum depth of recessed portion (mm) |
|---|---|---|---|---|---|---|---|---|---|---|---|---|---|
| | C | Si | Mn | Cu | Ni | Cr | Mo | V | Co | O | N | | |
| B1 | 0.29 | 0.07 | 1.50 | 0.22 | 0.18 | 0.99 | 1.75 | 0.38 | 0.07 | 0.0015 | 0.013 | 6 | 0.071 |
| B2 | 0.30 | 0.08 | 1.49 | 0.21 | 0.18 | 0.91 | 1.78 | 0.37 | 0.07 | 0.0068 | 0.011 | 36 | 0.161 |
| B3 | 0.31 | 0.13 | 1.52 | 0.21 | 0.19 | 0.95 | 1.75 | 0.35 | 0.07 | 0.0098 | 0.011 | 88 | 0.245 |
| B4 | 0.30 | 0.14 | 1.51 | 0.21 | 0.18 | 0.95 | 1.77 | 0.37 | 0.07 | 0.0017 | 0.029 | 47 | 0.167 |
| B5 | 0.31 | 0.08 | 1.52 | 0.21 | 0.17 | 0.91 | 1.76 | 0.35 | 0.08 | 0.0019 | 0.056 | 109 | 0.214 |

According to Table 3 and FIG. 3, as the thickness of the oxide being formed was increased by changing the component composition, the maximum depth of the recessed portion being formed due to wear increased. The thickness of the oxide changed mainly depending on the contents of O and N.

As can be seen from the approximate line illustrated by dotted line in FIG. 3, it was found that the maximum depth of the recessed portion almost linearly increases with the thickness of the oxide. However, in FIG. 2 showing the reliance of the maximum depth of the recessed portion on the hardness of the oxide, when the hardness of the oxide doubled from 300 HV to 600 HV, the maximum depth of the recessed portion increased approximately four times from approximately 0.1 mm to approximately 0.4 mm; whereas, in FIG. 3 showing the reliance of the maximum depth of the recessed portion on the thickness of the oxide, even when the thickness of the oxide doubles from 60 µm to 120 µm, the maximum depth of the recessed portion failed to double, that is, increased only from approximately 0.15 mm to approximately 0.25 mm. From this fact, it can be found that the degree of wear more significantly relies on the hardness than the thickness of the oxide.

From these results, it is found that, in the repair-welding material, the thickness of the surface oxide is desirably suppressed at a low level in order to suppress wear in the welded portion. However, it is more effective for the suppression of wear to suppress the hardness than the thickness (mass) of the oxide.

### Test 4: Relationship between Component Composition of Repair-Welding Material and Variety of Characteristics

The relationships between the component composition of the repair-welding material and properties such as the hardness or thermal conductivity of the welded portion, the formation of defects in the welded portion, and the degree of wear were investigated.

### (Production of Specimen)

Repair-welding materials respectively containing component elements shown in Tables 4 to 7 with a balance being Fe and inevitable impurities were prepared in the following manner. First, 50 kg of molten steel was prepared in a vacuum induction furnace, followed by carrying out casting, to thereby produce an ingot. The obtained ingot was heated at 1,200°C for five hours and then, hot forged, rolled and wire-drawn until the diameter reached 2.0 mm. After the hot working, the ingot was held at 700°C for 10 hours and then slowly cooled, thereby carrying out low-temperature annealing.

The material produced above was used as a welding rod, and TIG welding was carried out on a surface of 30 mm in diameter of a welding base material of 30 mm in diameter × 15 mm in height, which had been produced by using hot tool steel SKD61 (hardness: 50 HRC, thermal conductivity: 23 W/(m·K)). As the condition during the welding, a welding current was set to from 100 A to 150 A, and 10 paths of welding was carried out so as to form five layers. Weaving was not carried out, and neither preheating nor post-heating was carried out. The temperature between the paths was set to 300°C or lower, the welding was carried out under conditions of backstep welding, and building-up was carried out up to a height of approximately 5 mm.

### (Evaluation of Various Characteristics)

### Hardness of Welded Portion

With respect to the specimen produced above, a portion of approximately 1 mm was removed from the surface of the building-up welded portion by grinding, and then the hardness of the surface of the building-up welded portion was measured by using a Rockwell C scale.

### Thermal Conductivity of Welded Portion

In the specimen produced above, a test specimen of 10 mm in diameter × 1 mm in height was cut out from the building-up welded portion by turning. A laser flash-type thermal conductivity measurement was carried out for the test specimen by using a thermal constant measurement apparatus (TC-7000H, manufactured by ULVAC-RIKO, Inc.), thereby obtaining its thermal conductivity.

### Determination of Welding Defects

In the specimen produced above, the presence or absence of surface cracks on an appearance of the building-up welded portion was determined in a color-check manner. Furthermore, the surface of 30 mm in diameter of the specimen was cut to a half, and the cut surface was mirror-polished and then observed by using an optical microscope. In addition, the presence or absence of blowholes and whether or not ten or more oxides or nitrides having a length exceeding 5 µm were formed in a 5 mm×3 mm view field was judged.

### Evaluation of Wear Resistance

With respect to the specimen produced above, a portion of approximately 1 mm was removed from the surface of the building-up welded portion by grinding, and then, similar to the test 2, a wear test accompanying oxidation was carried out in the ball-on-disc manner. Then, the maximum depth of the formed recessed portion was measured.

The cases where the maximum depth of the recessed portion was approximately 0.15 mm or less can be evaluated as excellent in wear resistance. On the other hand, the cases where the maximum depth of the recessed portion was greater than 0.15 mm were evaluated as poor in wear resistance. Particularly, the cases where the maximum depth of the recessed portion exceeded 0.3 mm can be evaluated as significantly poor in wear resistance.

### (Test Results)

Tables 4 to 7 summarize the component compositions of the repair-welding materials according to the respective Examples and the respective Comparative Examples and the evaluation results of the respective characteristics. For the component compositions, a mark "-" indicates that the corresponding element is not included except for an inclusion as an impurity. In addition, for the evaluation results of the welding defects, a mark "-" indicates that no welding defects were observed.

**[Table 4]**

| Example | Component composition [mass%] | | | | | | | | | | | | |
|---|---|---|---|---|---|---|---|---|---|---|---|---|---|
| | C | Si | Mn | Cr | Mo | V | N | O | Cu | Ni | Co | P | S |
| 1 | 0.34 | 0.18 | 1.33 | 0.57 | 2.50 | 0.32 | 0.0064 | 0.0015 | 0.41 | 0.41 | 0.10 | - | - |
| 2 | 0.19 | 0.05 | 1.32 | 1.33 | 1.53 | 0.88 | 0.0085 | 0.0009 | 0.03 | 0.11 | 0.08 | - | - |
| 3 | 0.32 | 0.18 | 1.34 | 1.48 | 1.63 | 0.38 | 0.0073 | 0.0050 | 0.05 | 0.48 | 0.003 | - | - |
| 4 | 0.26 | 0.19 | 1.34 | 1.41 | 2.41 | 0.93 | 0.0199 | 0.0048 | 0.32 | 0.32 | 0.01 | - | - |
| 5 | 0.33 | 0.16 | 1.82 | 0.52 | 1.61 | 0.56 | 0.0042 | 0.0015 | 0.37 | 0.03 | 0.02 | - | - |
| 6 | 0.27 | 0.12 | 1.36 | 0.53 | 1.73 | 0.62 | 0.0021 | 0.0046 | 0.35 | 0.12 | 0.09 | - | - |
| 7 | 0.28 | 0.11 | 1.88 | 0.68 | 1.55 | 0.33 | 0.0200 | 0.0005 | 0.24 | 0.37 | 0.001 | - | - |
| 8 | 0.28 | 0.18 | 1.31 | 1.50 | 2.29 | 0.36 | 0.0121 | 0.0002 | 0.14 | 0.50 | 0.09 | - | - |
| 9 | 0.33 | 0.02 | 1.30 | 0.51 | 2.38 | 0.99 | 0.0200 | 0.0038 | 0.44 | 0.08 | 0.08 | - | - |
| 10 | 0.33 | 0.16 | 1.30 | 1.19 | 1.50 | 0.71 | 0.0184 | 0.0021 | 0.01 | 0.01 | 0.10 | - | - |
| 11 | 0.28 | 0.17 | 1.41 | 0.59 | 1.51 | 0.81 | 0.0174 | 0.0009 | 0.08 | 0.28 | 0.10 | 0.011 | 0.027 |
| 12 | 0.31 | 0.20 | 1.78 | 0.61 | 1.93 | 0.95 | 0.0084 | 0.0048 | 0.28 | 0.35 | 0.002 | 0.008 | 0.014 |
| 13 | 0.33 | 0.01 | 1.83 | 0.55 | 2.18 | 0.42 | 0.0029 | 0.0011 | 0.02 | 0.11 | 0.01 | 0.021 | 0.033 |
| 14 | 0.30 | 0.15 | 1.63 | 1.08 | 1.98 | 0.75 | 0.0154 | 0.0032 | 0.15 | 0.22 | 0.01 | 0.012 | 0.001 |
| 15 | 0.18 | 0.20 | 1.85 | 1.39 | 2.07 | 1.00 | 0.0094 | 0.0041 | 0.09 | 0.05 | 0.015 | 0.028 | 0.031 |
| 16 | 0.29 | 0.19 | 1.32 | 1.49 | 2.48 | 0.98 | 0.0155 | 0.0050 | 0.11 | 0.24 | 0.08 | 0.005 | 0.021 |
| 17 | 0.26 | 0.17 | 1.34 | 1.21 | 2.44 | 0.53 | 0.0143 | 0.0044 | 0.12 | 0.14 | 0.07 | 0.021 | 0.007 |
| 18 | 0.29 | 0.18 | 1.90 | 0.50 | 2.31 | 0.82 | 0.0195 | 0.0022 | 0.15 | 0.44 | 0.06 | 0.014 | 0.001 |
| 19 | 0.32 | 0.07 | 1.53 | 1.32 | 1.68 | 0.41 | 0.0031 | 0.0049 | 0.11 | 0.02 | 0.05 | 0.011 | 0.012 |
| 20 | 0.31 | 0.20 | 1.63 | 0.63 | 1.58 | 0.30 | 0.0075 | 0.0048 | 0.48 | 0.09 | 0.013 | 0.002 | 0.008 |
| 21 | 0.29 | 0.09 | 1.32 | 1.08 | 1.82 | 0.31 | 0.0143 | 0.0036 | 0.50 | 0.15 | 0.01 | 0.005 | 0.003 |

**[Table 5]**

| Example | Thermal conductivity of welded portion (W/(m·K)) | Hardness of welded portion (HRC) | Welding defect | Maximum depth of worn recessed portion (mm) |
|---|---|---|---|---|
| 1 | 39 | 59 | - | 0.118 |
| 2 | 40 | 60 | - | 0.133 |
| 3 | 43 | 58 | - | 0.085 |
| 4 | 41 | 45 | - | 0.145 |
| 5 | 38 | 52 | - | 0.074 |
| 6 | 37 | 48 | - | 0.077 |
| 7 | 31 | 49 | - | 0.064 |
| 8 | 30 | 54 | - | 0.085 |
| 9 | 30 | 57 | - | 0.045 |
| 10 | 46 | 55 | - | 0.056 |
| 11 | 38 | 48 | - | 0.089 |
| 12 | 39 | 60 | - | 0.144 |
| 13 | 38 | 58 | - | 0.031 |
| 14 | 37 | 58 | - | 0.039 |
| 15 | 33 | 45 | - | 0.148 |
| 16 | 31 | 56 | - | 0.045 |
| 17 | 36 | 47 | - | 0.132 |
| 18 | 34 | 49 | - | 0.067 |
| 19 | 36 | 57 | - | 0.072 |
| 20 | 45 | 55 | - | 0.084 |
| 21 | 34 | 50 | - | 0.084 |

**[Table 6]**

| Comparative Example | Component composition [mass%] | | | | | | | | | | | | |
|---|---|---|---|---|---|---|---|---|---|---|---|---|---|
| | C | Si | Mn | Cr | Mo | V | N | O | Cu | Ni | Co | P | S |
| 1 | 0.38 | 0.92 | 0.53 | 5.32 | 1.25 | 0.98 | 0.0174 | 0.0021 | 0.12 | 0.14 | 0.01 | 0.011 | 0.001 |
| 2 | 1.43 | 0.34 | 0.43 | 12.05 | 1.05 | 0.32 | 0.0184 | 0.0033 | 0.15 | 0.17 | - | 0.009 | 0.001 |
| 3 | 0.52 | 1.23 | 0.34 | 7.98 | - | - | 0.0142 | 0.0013 | 0.18 | 0.13 | - | 0.013 | 0.002 |
| 4 | 0.85 | 0.33 | 0.38 | 4.89 | 5.12 | 1.98 | 0.0189 | 0.0033 | 0.15 | 0.21 | - | 0.021 | 0.001 |
| 5 | 0.16 | 0.31 | 1.63 | 2.26 | 0.43 | 0.11 | 0.0103 | 0.0015 | 0.06 | 0.11 | 0.01 | 0.014 | 0.033 |
| 6 | 0.26 | 0.95 | 1.34 | 1.21 | 2.44 | 0.53 | 0.0029 | 0.0011 | 0.12 | 0.14 | 0.07 | 0.021 | 0.007 |
| 7 | 0.26 | 0.34 | 1.81 | 0.78 | 1.79 | 0.67 | 0.0088 | 0.0031 | 0.32 | 0.32 | 0.02 | - | - |
| 8 | 0.24 | 0.17 | 1.41 | 3.56 | 1.51 | 0.81 | 0.0184 | 0.0021 | 0.08 | 0.28 | 0.10 | 0.011 | 0.027 |
| 9 | 0.21 | 0.11 | 1.84 | 2.09 | 1.83 | 0.65 | 0.0199 | 0.0014 | 0.19 | 0.31 | 0.08 | - | - |
| 10 | 0.31 | 0.09 | 1.68 | 0.98 | 3.09 | 0.62 | 0.0021 | 0.0056 | 0.37 | 0.03 | 0.06 | - | - |
| 11 | 0.20 | 0.12 | 1.46 | 0.14 | 1.73 | 0.71 | 0.0056 | 0.0021 | 0.18 | 0.22 | 0.08 | - | - |
| 12 | 0.34 | 0.16 | 1.73 | 0.79 | 1.03 | 0.56 | 0.0042 | 0.0014 | 0.35 | 0.12 | 0.07 | - | - |
| 13 | 0.14 | 0.05 | 1.35 | 1.35 | 1.67 | 0.44 | 0.0089 | 0.0048 | 0.04 | 0.48 | 0.07 | - | - |
| 14 | 0.48 | 0.17 | 1.24 | 1.42 | 1.93 | 0.88 | 0.0144 | 0.0015 | 0.07 | 0.12 | 0.008 | - | - |
| 15 | 0.33 | 0.20 | 1.78 | 0.61 | 1.93 | 0.95 | 0.0345 | 0.0085 | 0.28 | 0.35 | 0.002 | 0.008 | 0.014 |

**[Table 7]**

| Comparative Example | Thermal conductivity of welded portion (W/(m·K)) | Hardness of welded portion (HRC) | Welding defect | Maximum depth of worn recessed portion (mm) |
|---|---|---|---|---|
| 1 | 23 | 62 | Surface cracks | 0.387 |
| 2 | 18 | 58 | Surface cracks | 0.542 |
| 3 | 19 | 63 | Surface cracks | 0.421 |
| 4 | 21 | 64 | - | 0.387 |
| 5 | 32 | 42 | - | 0.278 |
| 6 | 26 | 49 | - | 0.197 |
| 7 | 23 | 53 | - | 0.367 |
| 8 | 28 | 51 | - | 0.267 |
| 9 | 25 | 50 | - | 0.438 |
| 10 | 26 | 55 | - | 0.376 |
| 11 | 35 | 41 | - | 0.121 |
| 12 | 37 | 43 | - | 0.137 |
| 13 | 34 | 38 | - | 0.123 |
| 14 | 22 | 60 | - | 0.143 |
| 15 | 35 | 58 | Nitride | 0.455 |

According to Tables 4 and 5, the repair-welding materials according to the respective Examples which each had a component composition in the range specified in the embodiment of the present invention had a thermal conductivity of 30 W/(m·K) or more in the welded portion. In addition, the repair-welding materials had a hardness of 45 HRC or more and 60 HRC or less in the welded portion. In addition, the repair-welding materials according to the respective Examples caused no welding defects and, regarding the wear resistance, the maximum wear depth was suppressed at 0.15 mm or less. The repair-welding materials according to the respective Examples were determined to have an excellent wear resistance.

In the respective Examples, it is interpreted that a high wear resistance was achieved because the formation of an oxide or nitride having a high hardness was suppressed in the welded portion due to the fact that the welded portion has a high thermal conductivity derived from the effect of the component composition, and due to the effect of the component composition itself, that is, in particular, the contents of the alloy elements such as Si, Cr, and Mo were suppressed at a low level and the contents of O and N were also limited. In addition, due to the effect of the component composition, the welding defects such as the formation of a nitride were not easily generated.

Furthermore, when attention is paid to C, Examples in which the content of C was 0.27% or more could provide a particularly high hardness of 48 HRC or more in the welded portion. Among them, Examples in which the content of C was 0.33% or less satisfied the hardness of the welded portion being within a range of 48 HRC or more and 58 HRC or less.

On the other hand, Tables 6 and 7 show that the repair-welding materials according to the respective Comparative Examples did not have a component composition in the range specified by the embodiment of the present invention. Accordingly, Comparative Examples exhibited the maximum depths greater than Examples in the wear tests and had poorer wear resistance.

The component compositions of Comparative Examples 1 to 4 respectively correspond to SKD61, SKD11, SUH11, and SKH51. These materials have been widely diffused as a TIG welding material. In all of Comparative Examples 1 to 4, the contents of Si and Cr were larger than the upper limit value specified by the embodiment of the present invention. Accordingly, the thermal conductivity of the welded portion was lower than 30 W/(m·K). In addition, the maximum depth of the recessed portion exceeded 0.3 mm, which indicated poor wear resistance. In addition, in Comparative Examples 1 to 3, surface cracks were also generated as the welding defect. The generation of surface cracks was resulted from the large content of C or Cr.

Cases where the content of Si or Cr was large showed high hardness. Particularly, in Comparative Examples 1, 3 and, 4, a hardness of more than 60 HRC which is not required for the repair-welding material according to the embodiment of the present invention was observed. However, the welded portion showed extremely poor wear resistance although such a high hardness could be obtained. This fact indicates that the improvement of the hardness of the welded portion does not have a strong effect in terms of the suppression of the scratch wear of the welded portion. Conversely, it can be said that a decrease in the contents of the alloy elements including Si and Cr, and the suppression of the formation of an oxide or nitride having a high hardness on the surface of the welded portion have a strong effect in terms of the suppression of scratch wear.

The component composition of Comparative Example 5 is widely diffused as a low-alloy welding material, but the contents of Si and Cr were more than the upper limit value specified by the embodiment of the present invention. Accordingly, although the thermal conductivity of the welded portion slightly exceeded 30 W/(m·K), the maximum depth of the recessed portion exceeded 0.15 mm, which indicted a poor wear resistance. In addition, mainly because the content of C was small, the hardness did not reach 45 HRC.

In Comparative Examples 6 and 7, the content of Si exceeded the upper limit value specified by the embodiment of the present invention. In Comparative Examples 8 and 9, the content of Cr exceeded the upper limit value specified by the embodiment of the present invention. In Comparative Example 10, the content of Mo exceeded the upper limit value specified by the embodiment of the present invention. Accordingly, in all of these Comparative Examples, the thermal conductivity of the welded portion became smaller than 30 W/(m·K). In addition, the maximum depth of the recessed portion exceeded 0.15 mm, which indicated a poor wear resistance.

In Comparative Examples 11 and 12, the respective contents of Cr and Mo became smaller than the lower limit value specified by the embodiment of the present invention. Accordingly, the hardness of the welded portion could not achieve the lower limit value which is demanded for the use as a die, that is, 45 HRC.

In Comparative Example 13, the content of C was too small. Accordingly, the welded portion could not achieve a hardness of 45 HRC or more.

In Comparative Example 14, the content of C was too large. Accordingly, the thermal conductivity of the welded portion became smaller than 30 W/(m·K).

In Comparative Example 15, the contents of N and O became larger than the upper limit value specified by the embodiment of the present invention. Therefore, an oxide or nitride having a high hardness was likely to be generated on the surface of the welded portion, and the maximum depth of the recessed portion exceeded 0.3 mm, which indicated a poor wear resistance. As the welding defect, the generation of a nitride was also confirmed.

Hitherto, the embodiment of the present invention has been described in detail, but the present invention is only limited by the scope of the appended claims.

The present application is based on a Japanese patent application No. 2017-218923 filed on November 14, 2017.

## Claims

1. A repair-welding material for die,
having a composition consisting of, by mass%:
0.18%≤C≤0.35%,
0.01%≤Si≤0.20%,
1.30%≤Mn≤1.90%,
0.50%≤Cr≤1.50%,
1.50%≤Mo≤2.50%,
0.30%≤V≤1.00%,
N≤0.020%,
O≤0.0050%,
Ni≤0.50%,
Cu≤0.50%,
Co≤0.10%,
P≤0.030%,
S≤0.050%,
Al<0.050%,
W<0.10%,
Nb<0.10%,
Ta<0.01%,
Ti<0.10%,
Zr<0.01%,
B<0.010%,
Ca<0.010%,
Se<0.03%,
Te<0.01%,
Bi<0.01%,
Pb<0.03%,
Mg<0.02%, and
REM<0.10%,
with the balance being Fe and inevitable impurities.

2. Use of the repair-welding material for die, described in Claim 1, for repair-welding of a die having a hardness of 52 HRC or less at room temperature.

3. A die comprising a base material and a welded portion,
wherein the base material has a hardness of 52 HRC or less at room temperature, and
the welded portion is formed of the repair-welding material as described in Claim 1.

4. The die according to Claim 3, wherein the welded portion has a thermal conductivity of 30 W/(m·K) or more at room temperature.

5. The die according to Claim 3 or 4, wherein the welded portion has a hardness of 45 HRC or more and 60 HRC or less at room temperature.

## Patentansprüche

1. Reparaturschweißmaterial für Matrizen, mit einer Zusammensetzung bestehend aus, in Masse%:
0,18%≤C≤0,35%,
0,01%≤Si≤0,20%,
1,30%≤Mn≤1,90%,
0,50%≤Cr≤1,50%,
1,50%≤Mo≤2,50%,
0,30%≤V≤1,00%,
N≤0,020%,
O≤0,0050%,
Ni≤0,50%,
Cu≤0,50%,
Co≤0,10%,
P≤0,030%,
S≤0,050%,
Al<0,050%,
W<0,10%,
Nb<0,10%,
Ta<0,01%,
Ti<0,10%,
Zr<0,01%,
B<0,010%,
Ca<0,010%,
Se<0,03%,
Te<0,01%,
Bi<0,01%,
Pb<0,03%,
Mg<0,02%, und
REM<0,10%,
mit dem Rest Fe und unvermeidliche Verunreinigungen.

2. Verwendung des in Anspruch 1 beschriebenen Reparaturschweißmaterials für Matrizen zum Reparaturschweißen einer Matrize mit einer Härte von 52 HRC oder weniger bei Raumtemperatur.

3. Matrize mit einem Basismaterial und einem geschweißten Bereich, wobei das Basismaterial eine Härte von 52 HRC oder weniger bei Raumtemperatur aufweist und der geschweißte Bereich aus dem in Anspruch 1 beschriebenen Reparaturschweißmaterial gebildet ist.

4. Matrize gemäß Anspruch 3, wobei der geschweißte Bereich eine thermische Leitfähigkeit von 30 W/(m·K) oder mehr bei Raumtemperatur aufweist.

5. Matrize gemäß Anspruch 3 oder 4, wobei der geschweißte Bereich eine Härte von 45 HRC oder mehr und 60 HRC oder weniger bei Raumtemperatur aufweist.

## Revendications

1. Matériau de réparation par soudage pour matrice,
ayant une composition constituée de, en masse :
0,18 %≤ C ≤ 0,35 %,
0,01 % ≤ Si ≤ 0,20 %,
1,30 % ≤ Mn ≤ 1,90 %,
0,50 % ≤ Cr ≤ 1,50 %,
1,50 % ≤ Mo ≤ 2,50%,
0,30 % ≤ V ≤ 1,00 %,
N ≤ 0,020 %,
O ≤ 0,0050 %,
Ni ≤ 0,50 %,
Cu ≤ 0,50 %,
Co ≤ 0,10 %,
P ≤ 0,030 %,
S ≤ 0,050 %,
Al < 0,050 %,
W < 0,10 %,
Nb < 0,10 %,
Ta < 0,01 %,
Ti < 0,10 %,
Zr < 0,01 %,
B < 0,010 %,
Ca < 0,010 %,
Se < 0,03 %,
Te < 0,01 %,
Bi < 0,01 %,
Pb < 0,03 %,
Mg < 0,02 %, et
REM < 0,10 %,
le reste étant Fe et des impuretés inévitables.

2. Utilisation du matériau de réparation par soudage pour matrice, décrit dans la revendication 1, pour la réparation par soudage d'une matrice présentant une dureté de 52 HRC ou moins à la température ambiante.

3. Matrice comprenant un matériau de base et une partie soudée,
le matériau de base présentant une dureté de 52 HRC ou moins à température ambiante, et
la partie soudée étant formée du matériau de réparation par soudage comme décrit dans la revendication 1.

4. Matrice selon la revendication 3, dans laquelle la partie soudée a une conductivité thermique de 30 W/(m•K) ou plus à température ambiante.

5. Matrice selon la revendication 3 ou 4, dans laquelle la partie soudée présente une dureté de 45 HRC ou plus et de 60 HRC ou moins à température ambiante.
